Europäisches Patentamt

European Patent Office

Office européen des brevets

(19)

(11) Publication number: **0 160 297 B1**

# EUROPEAN PATENT SPECIFICATION

(12)

(45) Date of publication of patent specification: **04.12.91** (51) Int. Cl.⁵: **B29C 49/00, B29C 49/28**

(21) Application number: **85105251.4**

(22) Date of filing: **30.04.85**

(54) Apparatus and method for economically producing blowmolded containers having open necks on opposing faces thereof.

(30) Priority: **30.04.84 US 605171**

(43) Date of publication of application:
**06.11.85 Bulletin 85/45**

(45) Publication of the grant of the patent:
**04.12.91 Bulletin 91/49**

(84) Designated Contracting States:
**BE DE GB IT LU**

(56) References cited:
**DE-A- 2 419 256**      **FR-A- 2 160 162**
**GB-A- 1 236 253**      **US-A- 3 339 232**
**US-A- 3 351 980**      **US-A- 3 608 135**
**US-A- 3 796 531**      **US-A- 4 178 976**

(73) Proprietor: **The Coca-Cola Company**
**310 North Avenue**
**Atlanta Georgia 30313(US)**

(72) Inventor: **Hohmann, Frank G.**
**2 Richwood Place**
**Denville New Jersey 07834(US)**

(74) Representative: **Abitz, Walter, Dr.-Ing. et al**
**Abitz, Morf, Gritschneder, Freiherr von Witt-**
**genstein Postfach 86 01 09**
**W-8000 München 86(DE)**

Rank Xerox (UK) Business Services

## Description

The invention relates to an apparatus and a method for molding containers such as disposable containers for containing syrups and other liquids, which containers have open necks on opposing faces thereof.

For many years it has been customary to utilize plastic disposable containers for storing and dispensing a wide variety of liquid materials, particularly those that are consumable. These liquids range from intravenously dispensed fluids to beverages, such as milk, to syrups such as those utilized for making sundaes and soft drinks. While many methods have been suggested for producing such containers, the process that has achieved the greatest and most economical success in producing these containers is that conventionally known as "blow-molding".

In blow-molding, generally a container is produced by extruding a parison of a selected thermoplastic material in the form of a hollow tube that is then situated between two or more movable mold sections when these are in an open position. After a required length of the parison has been extruded, the mold sections for forming the container are closed together about the extruded parison so as to pinch together and close the lower end of the extruded parison and to constrict the upper end of it between the closed mold sections, which mold sections simultaneously commence the formation of a container neck portion by incompletely pinching off the top portion thereof. At substantially the same time that the mold sections are being brought together to close upon the parison, a blowpin assembly is moved into position and inserted into a neck defining opening at the top of the mold sections. Thereafter, that portion of the extruded parison situated within the mold cavity defined by the closed mold sections is inflated by a burst of gas, e.g., air or the like, and pressed against the internal walls of the mold cavity. Once the thermoplastic material has been forced by the inflating pressure against the internal walls of the mold cavity, the temperature of the thermoplastic material is lowered sufficiently so as to rigidify the thermoplastic material. Thereafter, the mold sections are opened and the blow-molded container expelled therefrom. Any flash or otherwise undesirable material that has been caught between the mold sections when they are closed is subsequently trimmed from the container and recycled for later use.

This method of forming containers is of particular utility in that, inherent in the materials and temperatures used in the process, sterile containers are readily produced requiring no further action other than maintenance of a noncontaminating environment prior to the placement of the liquid materials therein.

Typically, such plastic disposable containers are provided with a single opening to the outside, generally located on the surface of the container that is uppermost during use. It is also conventional to form such containers in a mold in which the neck opening is disposed at the top of the mold cavity as is shown, for example, in US-A-4,176,153 The mold apparatus is normally mounted vertically in an apparatus similar to that shown in US-A-4,147,748.

Clearly, for such apparatus to operate and produce disposable plastic containers in an economical manner, the equipment must be designed for and capable of operating at a rapid rate of repetition and without a requirement for human intervention for maintenance and adjustment. One of the more critical aspects of such operation is the alignment between the blow-molding assembly and the mold sections. The blowpin assembly is usually located above the mold and adapted to be moved into communication with the mold cavity immediately after the parison has been severed from the extruder and captured between the mold sections. The registration of this blowpin assembly so as to accurately enter the mold cavity through the neck opening in the mold requires a considerable amount of care in its initial set-up and is the aspect most susceptible to breakdown during operation.

While the foregoing apparatus has been found to be wholly sufficient for the manufacture of plastic disposable containers having a single neck opening therein, the disadvantage is present in that the apparatus is not readily adaptable to the situation where the disposable container is required to have more than one neck opening and where those neck openings are in opposing faces of the container, such as at the top and the bottom. Moreover, when a plurality of such neck openings are required in a container, a natural concomitant is that those neck openings be accurately positioned with respect to each other so that the equipment with which they are utilized can be constructed to receive the container and become attached to it without adjustment.

Clearly, the prior art apparatus is not susceptible to easy modification to accomplish the multiple-necked container. The mere addition of a second blowpin assembly positioned so as to oppose the first blowpin assembly and on the opposite side of the mold inherently creates an exponentially more severe registration problem, which problem is compounded by the fact that accurate dimensional interrelationships between the necks are necessary.

US-A 3,608,135 discloses an apparatus for blow-molding a container, having one neck, the blowpin assembly being mounted on one of the mold sections. That apparatus and method deviate from the conventional design in which the blowpin assembly is disposed outbord of the mold sections on the mold apparatus.

GB-A-1,236,253 discloses a blow-molding apparatus in which the blowpin nozzle includes an annular cutting sleeve surrounding the top of the nozzle to contact the edge of the neck opening to cut the tube at that edge to remove any portion of the tube that extends beyond the edge of the neck opening.

The invention as claimed in claims 1 and 7 solves the problem of how to blow mold a container including two opposing necks wherein the difficulty of achieving accurate registration between the neck openings is greatly diminished and conventional blow-molding machinery can be used.

Preferred embodiments of the invention are the subject matter of the subclaims.

One way of carrying out the invention is shown in the drawings, wherein:

Fig. 1 is a schematic, perspective view of the blow-molding apparatus;

Figure 2 is a schematic sectional view of the apparatus shown in Figure 1 taken along line 2-2 in Figure 1; and

Figures 3 through 5 are schematic representations showing the apparatus according to the present invention during various phases of the performance of the method of the present invention.

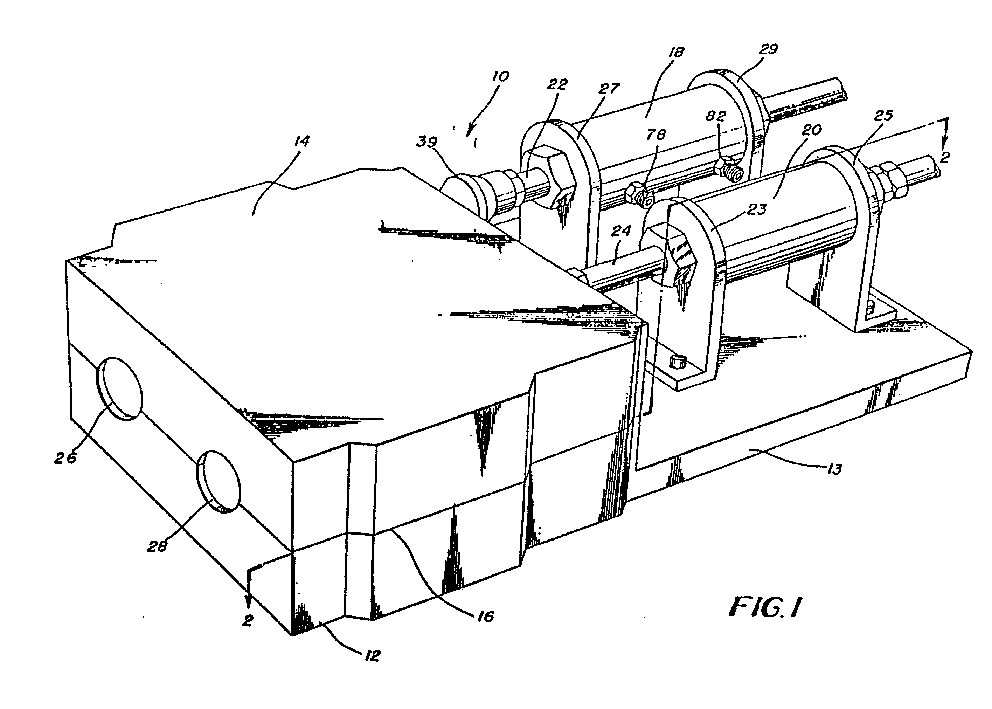

Turning initially to Figure 1, there is shown a perspective view of a mold assembly 10 which is comprised generally of two mating and relatively movable mold sections 12 and 14 that enclose one or more container-defining mold cavities therein. The mold assembly 10 depicted in Figure 1 has two such mold cavities therein. As noted hereinabove, the mold cavities defined by mold sections 12 and 14 have neck openings on opposing faces thereof. In the view of Figure 1, only the neck openings 26 and 28 at one end of the mold assembly are shown. The two mold sections 12 and 14 meet along a parting surface 16 that substantially bisects each of the neck openings provided in the molds, such as is shown for the neck openings 26 and 28. Preferably, the parting surface 16 is planar and also divides the internal mold cavities into substantially similar portions being in each mold section 12 and 14.

One of the mold sections, in this case mold section 12, has an extension 13. Mounted on the extension 13 are a pair of air cylinders 18 and 20 that include axially movable pistons 22 and 24. The air cylinders 18 and 20 are mounted on the extension 13 through brackets 23 and 25 that are associated with cylinder 20 and brackets 27 and 29 that affix cylinder 18. The cylinders 18 and 20 are mounted on the extension 13 so as to place the movable pistons 22 and 24 in a colinear relationship with the axis of the two neck openings of the two mold cavities that are in opposition to the neck openings 26 and 28.

The mold assembly 10 that is comprised of mold sections 12 and 14 and the associated apparatus mounted to mold section 12 is adapted so as to be mounted in the conventional manner into blow-molding apparatus, such as that which is shown, for example, in US-A-4,147,748 Generally speaking, as will be more fully apparent from the discussion below, the mold assembly 10 will conventionally be mounted in a blow-molding apparatus so that the axis of the neck openings 26, 28 and those with which the pistons 22 and 24 are colinear will be vertically oriented. As such, the mold sections 12 and 14 are relatively movable in a horizontal direction during the operation of the blow-molding apparatus.

As can be seen, by mounting the air cylinders 18 and 20 directly to the extension 13 of one of the mold sections 12, it is possible to accurately align the pistons 22 and 24 with the neck openings associated therewith outside of the blow-molding apparatus environment and to lock those air cylinders 18 and 20 into that position such that the need for future realignment is greatly diminished. Obviously, this ability to prealign the air cylinders 18,20 outside of the apparatus environment greatly reduces the maintenance time and skills required.

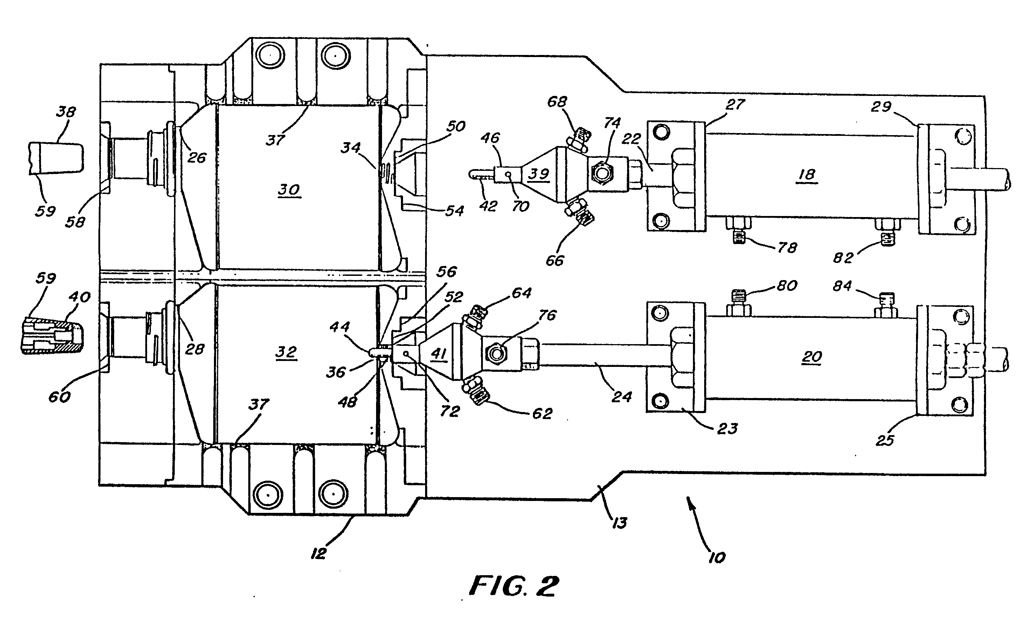

Turning now to Figure 2, there is shown a schematic sectional view taken along line 2-2 in Figure 1, i.e., along the parting surface 16 between the mold sections 12 and 14. Here, the two parallel container-defining mold cavities 30 and 32 are shown as having respective second neck openings 34 and 36. As denoted by the shaded portion 37, the mold section 12 is relieved slightly adjacent to the mold cavities 30 and 32 to provide venting of the cavities during the blow-molding operation.

Adjacent to the portions of mold section 12 that include the mold cavities 30 and 32 on the extension 13 are the air cylinders 18 and 20. The air cylinders 18 and 20 have axially movable reciprocal pistons 22 and 24 to the distal ends of which are affixed blowpin nozzles 39 and 41, respectively. The reciprocal movement thereof is denoted schematically in this Figure in that blowpin nozzles 39 is shown in its retracted position whereas assembly 41 is shown in its extended position and in engagement with the mold section 12. In practice, the air cylinders 18 and 20 will operate simultaneously and will, therefore, always be in the same relative position.

The blowpin nozzles 39 and 41 have tips 42 and 44, respectively, that penetrate through the neck openings 34 and 36 into the interior of the mold cavities 30 and 32. The tips 42 and 44 are sized so as to force the thermoplastic material outwardly against the neck openings 34,36 in the molds such that all desired threads or other intricacies of the neck configuration are formed. Immediately adjacent to the tips 42 and 44 are disposed annular cutting sleeves 46 and 48. The annular cutting sleeves 46 and 48 operate in cooperation with the edge defined between the neck openings 34 and 36 and external shoulders 50 and 52 on the mold cavity to substantially sever the thermoplastic material at the end of the neck so that the access material may be easily removable upon extraction of the completed containers from the mold cavity.

The blowpin nozzles 39 and 41 have fittings thereon for the passage of water therethrough. Fittings 64 and 68 permit the inward flow of water to the nozzles whereas fittings 62 and 66, respectively, allow the water to flow outward from the nozzles. This fluid is utilized for cooling the nozzle which comes into contact with the semi-molten thermoplastic material such that the temperature of the material in the neck portions is lowered sufficiently to rigidify those portions of the container prior to its extraction from the mold cavities. A further set of fittings 74 and 76 are located on the respective blowpin nozzles 39 and 41 to allow a fluid pressure line to be attached to the blowpin assembly for permitting fluid to be supplied to the interior of the mold cavity under pressure so as to force the thermoplastic material against the internal walls of the mold cavities 30 and 32. This fluid, which is preferably air, is supplied through the tips 42 and 44 of the nozzles 39,41. Vents 70 and 72 are provided in the exterior of the annular cutting sleeves 46 and 48 for allowing the escape of excess pressurized fluid.

The air cylinders 18 and 20 are operated in tandem by having suitable air supply lines attached thereto. The forward set of fittings 78 and 80 on air cylinders 18 and 20 communicate with the space above the pistons in the air cylinders and, when pressure is applied through fittings 78 and 80 serve to drive the pistons carrying the blowpin nozzles 39 and 41 downward and out of contact with the mold cavities 30 and 32. Conversely, the fittings 82 and 84 at the base of cylinders 18 and 20 communicate with the space in the air cylinders below the pistons and, when fluid pressure is applied through fittings 82 and 84 serve to force the pistons 22 and 24 and their blowpin nozzles 39 and 41 upward into engagement with the mold cavities.

As is readily apparent, the air cylinders 18 and 20 with their respective blowpin nozzles 39 and 41 can be accurately aligned with the neck openings 34 and 36 in the mold cavities 30 and 32 prior to the insertion of the mold assembly into the blow-molding apparatus.

At the opposing side of the mold cavities, conventional blowpin nozzles 38 and 40 are positioned in the mold assembly 10 so as to be capable of reciprocal movement along the axis of the respective neck openings 26 and 28. Blowpin nozzles 38 and 40 similarly have annular cutting members 57 and 59 associated therewith for cooperative engagement with external shoulders 58 and 60, respectively, at the exterior of the neck openings 26 and 28 to substantially remove excess portions of the parison of thermoplastic material at the molding stage. Also, blowpin nozzels 38 and 40 are sized to cause the proper molding of the corresponding necks on the containers.

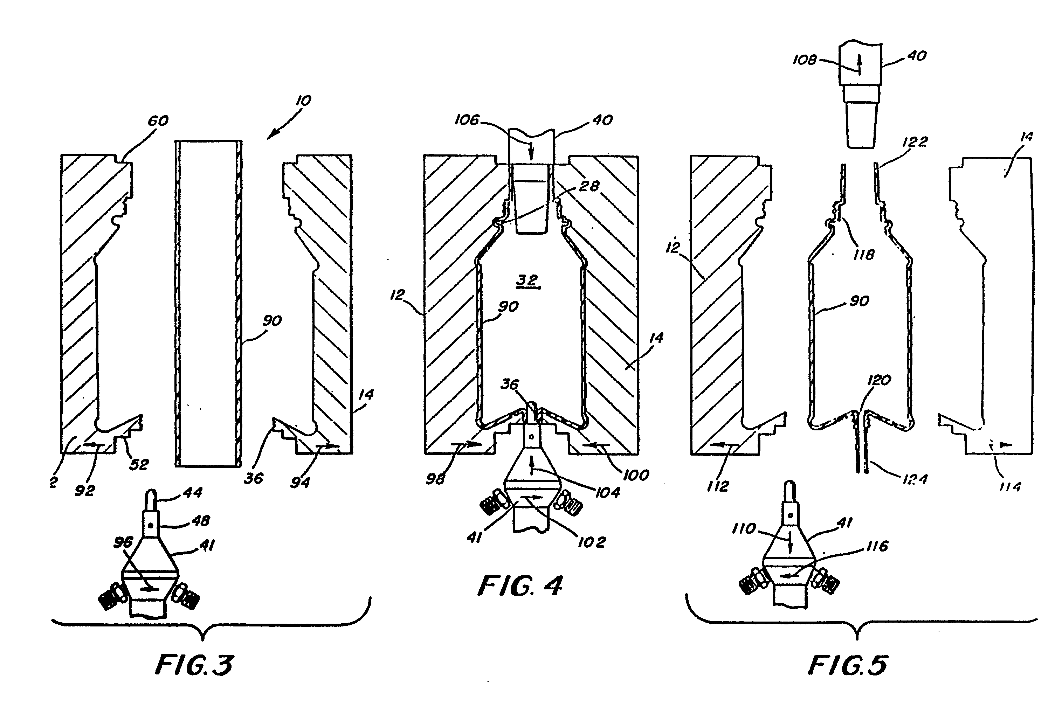

In operation, as is shown more clearly with respect to Figures 3, 4 and 5 of the drawing, initially a parison 90 is formed and directed between the mold sections 12 and 14 which, at this time, have been opened to allow the parison 90 to come between them. The opening of the mold sections 12 and 14 is indicated by the respective arrows 92 and 94. Similarly, as the blowpin nozzle 41 is, as shown in Figures 1 and 2, affixed to the extension 13 of mold section 12, blowpin nozzle 41 moves laterally together with mold section 12 as is indicated schematically by the arrow 96.

Any blow-moldable thermoplastic material compatible with the fluid product to be placed therein can be utilized in the apparatus and method of the present invention. Typical illustrative thermoplastic materials suitable for the present purposes are the usual blow-molding grade materials such as high- and low-density polyethylene, polypropylene, polycarbonate acetate, acrylonitrile-butadiene-styrene (ABS), and the like. As is well known, the parison 90 at this point is in a semi-molten state and is incapable of self-support. Therefore, the mold assembly is oriented vertically so as to accommodate the gravity feed of the parison 90 into the mold.

After the parison 90 has entered the mold, the mold sections 12 and 14 are closed about the parison such that the openings at the respective ends of the parison 90 are captured between the neck openings 28 and 36 at the ends of the mold cavity 32, as indicated by arrows 98, 100 and 102 in Figure 4. At this time, the two blowpin nozzels 40 and 41, are advanced into engagement with the mold such that the tips 42,44 thereof pass through the neck openings 34,36 and into the interior of the mold cavity 32 simultaneously molding the respective necks on the container. This is schematically illustrated in Figure 4 by the arrows 104 and 106 that are associated with the respective blowpin nozzles 41 and 40. After the blowpin nozzles 40 and 41 have come into engagement with the mold, the pressurized fluid is then passed through the two blowpin nozzels 40,41 the interior of the mold cavity 32 to force under fluid pressure the parison 90 outward against the internal walls of the container-defining mold cavity 32. At this time, the air remaining in the mold cavity and external to the parison 90 is forced from the mold cavity at the parting line venting provided at 37 as shown in Figure 2.

When the parison 90 comes into contact with the cooled blowpin nozzles 40 and 41 and the mold sections 12 and 14 all of which are maintained at temperatures well below that at which the selected thermoplastic material becomes rigid, the thermoplastic material is cooled relatively rapidly to a temperature at which it has rigidified. Generally, the mass of the mold sections 12,14 and the exposure of the outer surfaces to the ambient enfironment is sufficient to supply adequate cooling. It is, however, within the purview of the invention to cool the mold sections 12 and 14, such as by circulating a coolant therethrough. At this time, the blowpin nozzels 40 and 41 are retracted from engagement with the mold cavity as indicated by arrows 108 and 110, respectively. Substantially concurrently, mold sections 12 and 14 are retracted from contact with the parison 90 which has now been formed into the desired container, as indicated by arrows 112 and 144, respectively. Lower blowpin nozzle 41, being affixed to mold sections 12, also moves laterally as indicated by arrow 116. A molded container 90 having open necks 118 and 120 on its opposing upper and lower faces is now permitted to drop free from the mold for further processing and filling. At this time, the substantially severed remaining portions of the parison indicated schematically at 122 and 124 are retained with the container upon extraction from the mold cavity. This moil is later removed in a separate operation.

## Claims

1. Apparatus (10) for molding a container from a semi-molten, hollow tube (90) of thermoplastic material, the apparatus comprising

a split type mold assembly having a container-defining mold cavity (30, 32) therein that is formed to a configuration substantially identical to the exterior of the container and having a first neck opening (26, 28) corresponding to a first neck (118) on the container, the mold assembly including two relatively horizontally movable mold sections (12, 14) each having a portion of the cavity therein, the mold sections meeting along a parting surface (16) that substantially bisects the first neck opening (26, 28), and the mold assembly being adapted to enclose a length of the tube (90) of thermoplastic material therein with one end of the tube (90) passing at least partially through the first neck opening (26, 28),

a first vertically movable blowpin assembly disposed so that its line of movement is substantially colinear with the axis of the first neck opening (26, 28) in the mold assembly, the first blowpin assembly comprising blowpin nozzles (38, 40) adapted to move into engagement with the end of the tube (90) passing through the first neck opening (26, 28) so as to cause the molding of the tube end against the mold assembly to form the first neck on the container and being adapted to supply a fluid under pressure to the interior of the tube (90) to force the tube to expand and come into contact with the interior of the cavity

characterized for molding a container including two necks (118, 120), one on each of its opposing upper and lower faces by

the split type mold assembly having a second neck opening (34, 36) corresponding to the second neck on the container, the parting surface (16) substantially also bisecting the second neck opening (34, 36) and the other end of the tube (90) passing at least partially through the second neck opening (34, 36),

a second blowpin assembly mounted on one (12) of the mold sections, the second blowpin assembly comprising

means mounted on the one mold section (12) and having a support (18, 22; 20, 24) for reciprocally moving the support vertically so that its line of movement is substantially colinear with the axis of the second neck opening (34, 36) in the mold assembly, and

a second blowpin nozzle (39, 41) mounted on the support and being adapted to move into engagement with the end of the tube (90) passing through the second neck opening (34, 36) so as to cause the molding of the tube end against the mold assembly to form the second neck (120) on the container,

the second blowpin nozzle (39, 41) being adapted to supply the fluid under pressure to the interior of the tube (90) generally concurrently with the application of fluid pressure by the first blowpin assembly to force the tube to expand and come into contact with the interior of the cavity to form the container and

means for cooling the container (90) to rigidify the container prior to removing the container from the mold.

2. Apparatus according to Claim 1 for molding a container including two necks (118, 120) of different size, wherein the first blowpin assembly is associated to the larger neck opening (26, 28) and the second blowpin assembly is associated to the smaller neck opening (34, 36).

3. An apparatus according to Claim 1, wherein the means for reciprocally moving the second blowpin nozzle (37,41) comprises an air cylinder (18, 20) having an axially movable piston to the distal end of which is affixed the blowpin nozzle (39, 41).

4. An apparatus according to Claim 1, wherein the second blowpin nozzle (39, 41) includes an annular cutting sleeve (46, 48) surrounding the top of the nozzle to contact the edge of the neck opening (34, 36) in the mold assembly to limit the travel of the nozzle and to cut the tube (90) at that edge to remove any portion of the tube that extends beyond the edge of the neck opening (34, 36).

5. An apparatus according to Claim 1, wherein a plurality of mold assemblies and associated first and second blowpin assemblies are mounted in parallel to produce a like plurality of containers simultaneously.

6. An apparatus according to Claim 1, .wherein the container-defining cavity (30, 32) is substantially bisected by a planar parting surface (16).

7. A method for forming a plastic container, the method comprising the following steps

forming a semi-molten, hollow tube (90) of thermoplastic material,

providing an open assembly of mold parts having, when in its closed configuration, a container-defining mold cavity (30, 32) therein that is of a configuration substantially identical to the exterior of the container, the assembly including two relatively, horizontally movable mold sections (12, 14) each having a portion of the mold cavity therein, the mold sections meeting along a parting surface (16) that substantially bisects a first neck opening (26, 28) that the container-defining mold cavity (30, 32) has, which first neck opening (26, 28) corresponds to the first neck (118) on the container and the assembly comprising first blowpin nozzles (38, 40),

closing the mold assembly about the tube of thermoplastic material so as to confine a length thereof between the mold sections (12, 14) and within the cavity (30, 32) with an access opening at the end of the tube (90) remaining open being defined by the first neck opening (26, 28),

positioning the first blowpin assembly (38, 40) into the access opening in the end of the tube confined in the first neck opening (26, 28),

supplying fluid under pressure through the first blowpin assembly to the interior of the tube (90) to blowform the tube into the container by forcing the thermoplastic material against the mold cavity (30, 32),

cooling the thermoplastic material in the container-defining configuration to set the material,

withdrawing the blowpin assembly from contact with the container, and

opening the mold assembly to remove the completed container from the mold cavity,

characterized for molding a container having two necks (118, 120), one of which is on each of the opposing upper and lower faces of the container by

the mold cavity (30, 32) having a second neck opening (34, 36) corresponding to the second neck (120) on the container and the parting surface (16) also bisecting the second neck opening when the mold assembly is closed, an acces opening at the other end of the tube (90) remaining open being defined by the second neck opening (34,36),

mounting and permanently aligning a second blowpin assembly on one (12) of the mold sections so that a blowpin nozzle (39, 41) is reciprocally movable along a vertical line colinear with the axis of the second neck opening (34, 36),

positioning the second blowpin assembly into the access opening in the second end of the tube confined in the second neck opening (34, 36) and

fluid also being supplied under pressure through the second blowpin assembly.

8.  A method according to Claim 7, wherein all excess material is removed from the container.

9.  A method according to Claim 8, wherein the excess material is substantially cut from the container prior to the blowpin assemblies being withdrawn from contact with the molded container.

**Revendications**

1.  Appareil (10) pour mouler un récipient à partir d'un tube creux, semi-fondu (90) d'une matière thermoplastique,

    appareil qui comprend un ensemble de moulage ou moule du type à fente contenant une cavité de moulage délimitant le récipient (30, 32) qui est façonné en une configuration sensiblement identique aux parois extérieures du récipient et qui possède une première ouverture à goulot (26, 28) correspondant à un premier goulot (118) du récipient, le moule comprenant deux sections ou pièces de moule horizontalement mobiles (12, 14) qui comportent chacune une partie de la cavité précitée, les sections de moule coïncidant ou s'appariant le long d'une surface de partition (16) qui coupe sensiblement en deux parties égales la première ouverture à goulot (26, 28) et le moule étant adapté à recevoir une certaine longueur du tube (90) de matière thermoplastique, l'une des extrémités du tube (90) passant au moins partiellement à travers la première ouverture à goulot (26, 28),

    une première tête de soufflage verticalement mobile, disposée en une manière telle que sa trajectoire de déplacement soit sensiblement colinéaire à l'axe de la première ouverture à goulot (26, 28) dans le moule, la première tête de soufflage comprenant des buses de soufflage (38, 40) adaptées à se déplacer pour venir en contact avec l'extrémité du tube (90) passant à travers la première ouverture à goulot (26, 28), de manière à provoquer le moulage de l'extrémité du tube contre le moule pour former le premier goulot du récipient et adaptées à débiter un fluide sous pression à l'intérieur du tube (90) de manière à forcer le tube à se dilater et à venir en contact avec l'intérieur de la cavité, caractérisé en ce qu'il est conçu pour mouler un récipient comprenant deux goulots (118, 120), un sur chacune de ses faces supérieure et inférieure opposées, par

le moule du type à fente qui comporte une seconde ouverture de goulot (34, 36) correspondant au second goulot du récipient, la surface de partition (16) divisant également la seconde ouverture à goulot (34, 36) sensiblement en deux parties égales et l'autre extrémité du tube (90) passe au moins partiellement à travers la seconde ouverture à goulot (34, 36),

une seconde tête de soufflage montée sur l'une (12) des sections de moule, la seconde tête de moulage comprenant

un moyen monté sur l'une des sections de moule (12) et possédant un support (18, 22; 20, 24) pour déplacer réciproquement le support en direction verticale en une manière telle que sa trajectoire de déplacement soit sensiblement colinéaire à l'axe de la seconde ouverture à goulot (34, 36) dans le moule et

une seconde buse de soufflage (39, 41), montée sur le support et convenant à se déplacer de façon à nir en contact avec l'extrémité du tube (90) qui passe à travers la seconde ouverture à goulot (34, 36), de façon à provoquer le moulage de l'extrémité du tube contre le moule pour former le second goulot (120) du récipient,

la seconde buse de soufflage (39, 41) convenant pour débiter le fluide sous presssion à l'intérieur du tube (90), dans l'ensemble concurrement au débit de fluide sous pression par la première buse de soufflage, de manière à forcer le tube à se dilater et à entrer en contact avec l'intérieur de la cavité pour former le récipient et

un moyen pour refroidir le récipient (90) afin de rigidifer le récipient avant de sortir le récipient du moule.

2.  Appareil suivant la revendication 1 pour le moulage d'un récipient qui comprend deux goulots (118, 120) de calibre différent, caractérisé en ce que la première tête de soufflage est associée à l'ouverture du goulot le plus large (26, 28) et la seconde tête de soufflage est associée à l'ouverture du goulot le plus étroit (34, 36).

3.  Appareil suivant la revendication 1, caractérisé en ce que le moyen pour déplacer réciproquement la seconde buse de soufflage (39, 41), comprend un cylindre à air (18, 20) possédant un piston axialement mobile à l'extrémité distale duquel est fixé la buse de soufflage (39, 41).

4. Appareil suivant la revendication 1, caractérisé en ce que la seconde buse de soufflage (39, 41) comprend un manchon coupant annulaire (46, 48) enveloppant le sommet de la buse pour venir en contact avec le bord de l'ouverture à goulot (34, 36) dans le moule de façon à limiter le voyage de la buse et à couper le tube (90) à ce bord pour éliminer toute partie du tube qui s'étend au-delà du bord de l'ouverture à goulot (34, 36).

5. Appareil suivant la revendication 1, caractérisé en ce qu'une multiplicité de moules et de premières et secondes têtes de soufflage associées sont montés en parallèle pour produire une multiplicité analogue de récipients de manière simultanée.

6. Appareil suivant la revendication 1, caractérisé en ce que la cavité définissant le récipient (30, 32) est sensiblement coupée en parties égales par une surface de partition plane (16).

7. Procédé pour former un récipient en matière plastique, caractérisé en ce que le procédé comprend les étapes consistant à :

former un tube creux, semi-fondu (90) en une matière thermoplastique,

prendre un jeu ouvert de parties de moule comportant, en configuration fermée, une cavité de moule (30, 32) définissant un récipient, qui est de configuration sensiblement identique aux parois externes du récipient ou extérieur du récipient, le jeu comprenant deux pièces de moule (12, 14) mutuellement et horizontalement mobiles, chacune comportant une partie de la cavité du moule, les pièces du moule coïncidant ou s'appariant le long d'une surface de partition (16) qui coupe sensiblement en deux parties égales une première ouverture à goulot (26, 28) que possède la cavité du moule (30, 32) définissant le récipient, laquelle première ouverture à goulot (26, 28) correspond au premier goulot (118) du récipient et le jeu comprenant des premières buses de soufflage (38, 40),

fermer le moule autour du tube de matière thermoplastique, de manière à en confiner une longueur entre les pièces du moule (12, 14) et dans la cavité (30, 32), une ouverture d'accès à l'extrémité du tube (90) demeurant ouverte étant définie par la première ouverture à goulot (26, 28), mettre en place la première tête de soufflage (38, 40) dans l'ouverture d'accès prévue à l'extrémité du tube confinée dans la première ouverture à goulot (26, 28),

débiter un fluide sous pression à travers la première tête de soufflage à l'intérieur du tube (90) pour mouler par soufflage le tube en le récipient précité en forçant la matière thermoplastique contre la cavité du moule (30, 32),

refroidir la matière thermoplastique en configuration définissant le récipient de manière à faire durcir la matière,

déconnecter la tête de soufflage de son contact avec le récipient et

ouvrir le moule pour sortir le récipient achevé de la cavité du moule,

caractérisé pour le moulage d'un récipient comportant deux goulots (118, 120), l'un d'entre eux se trouvant sur chacune des faces supérieure et inférieure opposées du récipient, par la cavité du moule (30, 32) possédant une seconde ouverture à goulot (34, 36) correspondant au second goulot (120) sur le récipient et la surface de partition (16) coupant également la seconde ouverture à goulot en deux parties égales lorsque le moule est fermé, une ouverture d'accès à l'autre extrémité du tube (90) demeurant ouverte étant définie par la seconde ouverture à goulot (34, 36), monter et aligner en permanence une seconde tête de soufflage sur l'une (12) des pièces ou parties du moule en une manière telle qu'une buse de soufflage (39, 41), soit réciproquement mobile le long d'une ligne verticale colinéaire à l'axe de la seconde ouverture à goulot (34, 36),

mettre en place la seconde tête de soufflage dans l'ouverture d'accès dans la seconde extrémité du tube confinée dans la seconde ouverture à goulot (34, 36) et

débiter également du fluide sous pression à travers la seconde tête de soufflage.

8. Procédé suivant la revendication 7, caractérisé en ce que l'on élimine tout excès de matière du récipient.

9. Procédé suivant la revendication 8, caractérisé en ce que l'on découpe sensiblement l'excès de matière du récipient avant de retirer les têtes de soufflage de leur contact avec le récipient moulé.

**Patentansprüche**

1. Vorrichtung (10) zum Formen eines Behälters aus einem halbgeschmolzenem, hohlen Rohr (90) aus thermoplastischem Material, mit

   einem geteilten Formwerkzeug mit einem den Behälter definierenden Formhohlraum (30, 32) darin, der mit einer im wesentlichen dem Äußeren des Behälters entsprechenden Form ausgebildet ist und eine erste Halsöffnung (26, 28) aufweist, die einem ersten Hals (118) an dem Behälter entspricht, wobei das Formwerkzeug zwei zueinander horizontal bewegliche Formwerkzeugteile (12, 14) aufweist, von denen jeder einen Bereich des Hohlraums enthält, wobei sich die Formwerkzeugteile längs einer Trennfläche (16) treffen, die die erste Halsöffnung (26, 28) im wesentlichen durchschneidet, und wobei das Formwerkzeug eine Länge eines Rohres (90) aus thermoplastischem Material so einschließt, daß ein Ende des Rohres (90) wenigstens teilweise durch die erste Halsöffnung (26, 28) reicht,

   einem ersten vertikal beweglichen Blasdorn, der so angeordnet ist, daß seine Bewegung im wesentlichen kolinear mit der Achse der ersten Halsöffnung (26, 28) in dem Formwerkzeug ist, und Blasdorndüsen (38, 40) aufweist, die sich in Eingriff mit dem Ende des Rohres (90), das durch die erste Halsöffnung (26, 28) hindurchgeht, bewegen können, um das Formen des Rohrendes gegen das Formwerkzeug zur Bildung des ersten Halses an dem Behälter zu bewirken, und um ein Druckfluid ins Innere des Rohres (90) zu leiten und dadurch zu bewirken, daß das Rohr expandiert und in Berührung mit der Innenseite des Hohlraumes kommt,

   dadurch zum Formen eines Behälters mit zwei Hälsen (118, 120), einem an jedem seiner gegenüberliegenden oberen und unteren Stirnflächen gekennzeichnet,

   daß das geteilte Formwerkzeug eine zweite Halsöffnung (34, 36) hat, die dem zweiten Hals an dem Behälter entspricht, wobei die Trennfläche (16) im wesentlichen auch die zweite Halsöffnung (34, 36) durchschneidet und das andere Ende des Rohres (90) wenigstens teilweise durch die zweite Halsöffnung (34, 36) hindurchgeht,

   daß ein zweiter Blasdorn an einem (12) der Formwerkzeugteile befestigt ist und der zweite Blasdorn

   Mittel, die an dem einen Formwerkzeugteil (12) befestigt sind und eine Halterung (18, 22; 20, 24) zum vertikalen Hin- und Herbewegen der Halterung aufweist, so daß ihre Bewegung im wesentlich kolinear mit der Achse der zweiten Halsöffnung (34, 36) in dem Formwerkzeug ist, und

   eine zweite Blasdorndüse (39, 41), die an der Halterung montiert ist und sich in Eingriff mit dem Ende des Rohrs (90) bewegen kann, das durch die zweite Halsöffnung (34, 36) hindurchgeht, um so das Formen des Rohrendes gegen das Formwerkzeug zu bewirken und den zweiten Hals (120) an dem Behälter auszubilden, aufweist,

   wobei die zweite Blasdorndüse (39, 41) insgesamt gleichzeitig mit dem Aufbringen von Druckfluid durch den ersten Blasdorn das Druckfluid in das Innere des Rohres (90) leiten kann, um zu bewirken, daß sich das Rohr ausdehnt und in Berührung mit dem Inneren des Hohlraums zur Bildung des Behälters kommt, und

   daß Mittel zum Kühlen des Behälters (90) vorgesehen sind, um den Behälter vor dem Entfernen des Behälters aus dem Formwerkzeug erstarren zu lassen.

2. Vorrichtung nach Anspruch 1 zum Formen eines Behälters mit zwei Hälsen (118, 120) unterschiedlicher Größe, wobei der erste Blasdorn der größeren Halsöffnung (26, 28) zugeordnet ist und der zweite Blasdorn der kleineren Halsöffnung (34, 36) zugeordnet ist.

3. Vorrichtung nach Anspruch 1, wobei die Mittel zum Hin- und Herbewegen der zweiten Blasdorndüse (39, 41) einen Luftzylinder (18, 20) mit einem axialbeweglichen Kolben umfassen, an dessen distalem Ende die Blasdorndüse (39, 41) angebracht ist.

4. Vorrichtung nach Anspruch 1, wobei die zweite Blasdorndüse (39, 41) eine ringförmige Schneidhülse (46, 48) aufweist, die die Spitze der Düse umgibt, um die Kante der Halsöffnung (34, 36) in dem Formwerkzeug zu berühren und dabei den Bewegungsbereich der Düse zu begrenzen und das Rohr (90) an dieser Kante zu beschneiden, um Teile des Rohrs zu entfernen, die über die Kante der Halsöffnung (34, 36) hinausstehen.

5. Vorrichtung nach Anspruch 1, wobei eine Mehrzahl von Formwerkzeugen und zugeordneten ersten und zweiten Blasdornen parallel montiert sind, um eine ähnliche Vielzahl von Behältern gleichzeitig herzustellen.

6. Vorrichtung nach Anspruch 1, wobei der den Behälter definierende Hohlraum (30, 32) durch eine ebene Trennfläche (16) im wesentlichen durchschnitten wird.

7. Verfahren zum Formen eines Kunststoffbehälters, wobei

ein halbgeschmolzenes, hohles Rohr (90) aus termoplastischem Material hergestellt wird,

eine offene Anordnung von Formwerkzeugteilen bereitgestellt wird, die im geschlossenen Zustand einen den Behälter definierenden Formhohlraum (30, 32) ergeben, der in der Form im wesentlichen identisch zum Äußeren des Behälters ist, wobei die Anordnung zwei gegenseitig horizontal bewegliche Formwerkzeugteile (12, 14) aufweist, von denen jeder einen Teil des Formhohlraumes enthält, die Formwerkzeugteile längs einer Trennfläche (16) zusammentreffen, die im wesentlichen eine erste Halsöffnung (26, 28) durchschneidet, die der den Behälter definierende Formhohlraum (30, 32) hat, wobei die erste Halsöffnung (26, 28) dem ersten Hals (118) an dem Behälter entspricht, und die Anordnung erste Blasdorndüsen (38, 40) aufweist,

das Formwerkzeug um das Rohr aus thermoplastischem Material geschlossen wird, um eine Länge davon zwischen den Formwerkzeugteilen (12, 14) und innerhalb des Hohlraumes (30, 32) einzuschließen, wobei eine Zugangsöffnung an dem Ende des Rohrs (90) offen bleibt, die durch die erste Halsöffnung (26, 28) gebildet wird,

der erste Blasdorn (38, 40) in der Zugangsöffnung in dem Ende des Rohres, das in der ersten Halsöffnung (26, 28) eingeschlossen ist, angeordnet wird,

Druckfluid durch den ersten Blasdorn in das Innere des Rohres (90) geleitet wird, um das Rohr zu dem Behälter blaszuformen, in dem das thermoplastische Material gegen den Formhohlraum (30, 32) gedrückt wird,

das thermoplastische Material in der den Behälter bildenden Form gekühlt wird, um das Material zu härten,

der Blasdorn aus der Berührung mit dem Behälter zurückgezogen wird und

das Formwerkzeug geöffnet wird, um den fertigen Behälter aus dem Formhohlraum zu entfernen,

dadurch zum Formen eines Behälters mit zwei Hälsen (118, 120) von denen jeweils einer an den gegenüberliegenden oberen und unteren Seiten des Behälters liegt gekennzeichnet, daß

der Formhohlraum (30, 32) eine zweite Halsöffnung (34, 36) aufweist, die dem zweiten Hals (120) an den Behälter entspricht und die Trennfläche (16) auch die zweite Halsöffnung schneidet, wenn das Formwerkzeug geschlossen ist, wobei eine Zugangsöffnung, die an dem anderen Ende des Rohrs (90) offen bleibt, durch die zweite Halsöffnung (34, 36) gebildet wird,

ein zweiter Blasdorn an einem (12) der Formwerkzeugteile montiert und bleibend ausgerichtet wird, so daß der Blasdorn (39, 41) vertikal und kolinear mit der Achse der zweiten Halsöffnung (34, 36) hin- und herbewegbar ist,

der zweite Blasdorn in der Zutrittsöffnung in dem zweiten Ende des Rohres, das durch die zweite Halsöffnung (34, 36) eingeschlossen wird, angeordnet wird und
Fluid unter Druck auch durch den zweiten Blasdorn zugeführt wird.

8. Verfahren nach Anspruch 7, wobei jegliches überschüssige Material von dem Behälter entfernt wird.

9. Verfahren nach Anspruch 8, wobei das überschüssige Material im wesentlichen von dem Behälter geschnitten wird, bevor die Blasdorne aus der Berührung mit dem geformten Behälter zurückgezogen werden.

FIG.1

EP 0 160 297 B1

FIG. 2

EP 0 160 297 B1

12

FIG.5

FIG. 4

FIG.3